# EUROPÄISCHE PATENTSCHRIFT

(11) **EP 1 643 171 B1**
(45) Veröffentlichungstag und Bekanntmachung des Hinweises auf die Patenterteilung: **24.12.2008**
(21) Anmeldenummer: 05019970.2
(22) Anmeldetag: 14.09.2005
(51) Int. Cl.: F16J 15/34, B31B 19/00, B65H 27/00

(54) **Sich selbst einstellende Spaltdichtung zwischen zwei gegeneinander beweglicher Bauteile**
Self-adjusting gap sealing between two relatively to each other moving parts
Joint d'étanchéité autoréglable pour un interstice entre deux composants mobiles

(30) Priorität: 16.09.2004 DE 102004044803
(43) Veröffentlichungstag der Anmeldung: 05.04.2006
(73) Patentinhaber: Winkler + Dünnebier Aktiengesellschaft, 56564 Neuwied (DE)
(72) Erfinder: Raueiser, Reinhard, 56254 Müden (DE)

(56) Entgegenhaltungen:
- DE-A1- 2 261 415
- US-A- 2 852 255
- US-A- 4 765 632
- US-A- 5 133 562
- US-A1- 2002 129 687
- US-B1- 6 607 157

## Beschreibung

### I. Anwendungsgebiet

Die vorliegende Erfindung betrifft ein Spaltdichtungssystem mit selbsttätiger Einstellung des Spaltes zwischen einem ruhenden Bauteil, und einem sich bewegenden Bauteil oder sich relativ zueinander bewegender Bauteile, die einen gemeinsamen Hohlraum zum übertragen eines Mediums bilden, insbesondere zwischen einem Steuerventil und einer Saugwalze zum Transportieren von Zuschnitten mit Hilfe von Vakuum.
Aus Gründen der Einfachheit wird der Stand der Technik sowie die Erfindung im folgenden an dem Beispiel einer Saugwalze zur Herstellung von Briefhüllen dargestellt.

### II. Technischer Hintergrund

Es ist allgemein bekannt, das zwei sich relativ zueinander bewegende Bauteile, die einen gemeinsamen Hohlraum bilden, durch eine Spaltdichtung berührungslos gegen die Umwelt abgedichtet werden. Dabei wird in Kauf genommen, dass durch den Spalt ein Leckstrom fließt.
In den Maschinen zur Herstellung von Briethüllen wird diese Technik an vielen Stellen des Produktionsprozesses eingesetzt, um zum Beispiel um eine Saugwalze zum Transport von Briethüllenzuschnitten oder Materialbahnen, mit Vakuum zu versorgen.
Bei dem bekannten Aufbau wird die in einem Maschinengestell gelagerte Saugwalze über ein auf der Walzenachse gelagertes Steuerventil mit Vakuum versorgt. Das Steuerventil ist zum einstellen des Spaltes zwischen Vakuumwalze und Steuerventil axial verschiebbare und zum Einstellen der Fasenlage radial drehbar gelagert.
Zur Einstellung des Spaltes wird die Steuerscheibe auf der Achse mit Hilfe einer fixierbaren Einstellmutter gegen ein Federpaket so weit auf die Stirntläche der Saugwalze zu bewegt, bis der kleinst mögliche Spalt eingestellt ist, anschließend wird das Steuerventil axial und radial am Maschinengestell fixiert. Die Spaltbreite muss mit einer Fühlerlehre überprüft werden und darf nicht zu klein sein damit ein Fressen der Dichtflächen ausgeschlossen wird.
Über die Steuerscheibe gelangt das Vakuum an die in der Saugwalze querliegenden Saugluftkanäle und von dort an die auf dem Umfang entsprechen den jeweiligen Anforderungen verteilten Saugluftöffnungen.
Durch die Gestaltung des Steuerventils kann die Saugwalze auch sektionsweise mit Vakuum versorgt werden oder auch durch eine zweite Kammer in der Steuerscheibe bestimmte Sektionen mit Blasluft versorgen.
Als großer Nachteil dieser Vorrichtung erweist sich die enorme Teilevielfalt, der Montage- und Einstellaufwand sowie der benötigte Bauraum für Lagerung und Einstellvorrichtung des Steuerventils.

### III Darstellung der Erfindung

### a) Technische Aufgabe

Es ist daher die Aufgabe der vorliegenden Erfindung, eine Vorrichtung sowie ein Verfahren zur Minimierung des Dichtungsspaltes, des Platzbedarfes, der Teilevielfalt und des Montage- und Einstellaufwandes zu schaffen, die/das sich gleichzeitig durch niedrige Kosten für die Herstellung, Betrieb und Wartung auszeichnet.

### b) Lösung der Aufgabe

Diese Aufgabe wird mittels einer Vorrichtung mit den Merkmalen des Anspruches 1 bzw. mittels eines Verfahrens mit den Merkmalen des Anspruches 8 gelöst.
Weitere Ausgestaltungen ergeben sich aus den Unteransprüchen.
Die erfindungsgemäße Vorrichtung zum selbsttätigen Erzeugen einer berührungslosen Spaltdichtung besteht bevorzugt mindestens aus einem Steuerventil welches die Saugluftbohrungen auf dem Umfang einer Saugwalze über die Querbohrungen in der Saugwalze mit Vakuum und/oder Druckluft versorgt und einer Verstellvorrichtung.

Dabei ist es bei der vorliegenden Ausführungsform besonders vorteilhaft, wenn an der im Maschinengestell drehbar gelagerten Saugwalze noch eine Steuerscheibe angebracht ist, um die Saugwalze für verschiedene Formateinstellungen nutzen zu können.
Das Steuerventil ist erfindungsgemäß fest an dem Maschinengestell befestigt und so Aufgebaut, das es in der Lage ist, entsprechend den Anforderungen an die Saugwalze, die Saugwalze durch die Steuerscheibe über eine bestimmten Winkelbereich mit Vakuum und/oder Druckluft versorgt. Dabei kann das Steuerventil aus mehreren Teilsegmenten bestehen mit jeweils mindestens einem Anschluss für Vakuum oder Druckluft.
Zum erfindungsgemäßen selbsttätigen Einstellen der Spaltdichtung werden die beiden parallelen Dichtflächen von Saugwalze, oder Saugwalze mit Steuerscheibe, und Steuerventil mittels der Verstellvorrichtung mit der gewünschten Kraft aufeinander gedrückt und fixiert.
Die Verstellung erfolgt dabei über eine fixierbare Einstellmutter auf der Achse, welche die im Maschinengestell gelagerte Achse mit der darauf befestigten Saugwalze, axial gegen ein Federpaket bewegen kann. Alternativ ist denkbar das die Saugwalze in ihrer Lage fixiert ist und die Steuerscheibe über z.B. Zug-/Druckschrauben einstellbar und fixierbar gegenüber dem Gestell bewegbar ist.
Damit ein Dichtspalt entstehen kann, hat eine der Dichtflächen eine harte und raue Oberflächen, vorzugsweise die Dichtflächen der Saugwalze, und die andere besteht aus einem Material welches sich von der harten, rauen Flächen bearbeiten lässt. Bei der harten, rauen Oberfläche kann es sich z.B. um eine Beschichtung handeln oder man erzeugt die Rauheit durch Sandstrahlen. Als Gegenmaterial kann z.B. Graphit oder Kunststoff verwendet werden, dabei ist es besonders vorteilhaft wenn die Steuerscheibe nicht selbst aus dem Gegenmaterial besteht, sondern mit einer auswechselbaren Dichtfläche ausgestattet ist.
Mit dem Start der Drehbewegung findet eine Bearbeitung der weichen Dichtfläche statt. Dabei wird der Spalt hergestellt, der gerade so breit ist das kein Kontakt mehr zwischen den Dichtflächen besteht. Die dabei entstehenden Späne werden vom Vakuum abgesaugt.
Durch die Wahl der Oberflächenrauheit und der Profilierung der bearbeitenden Dichtfläche kann besonders vorteilhaft ein Labyrinthdichtungseffekt erreicht werden um den Leckstrom zu minimieren.

Ein weiterer Vorteil der Vorrichtung ist der Schutz gegen Fressen, wenn sich die Bauteile aufgrund zu starker Erwärmung ausdehnen, denn dabei vergrößert sich nur der Dichtpalt dieser kann anschließend auf einfache Art und Weise wieder neu eingestellt werden.
Die Entscheidung auf welcher Seite die bearbeitende Oberfläche aufgebracht wird, ist nur von der Aufgabenstellung und dem zur Verfügung stehenden Bauraum abhängig.
Im Rahmen der Beschreibung wird hier nicht auf die Funktionsweise bzw. Ansteuerung der einzelnen Saugluftöffnungen zum Beaufschlagen mit Vakuum durch innerhalb der Walzenkörper angeordneten Ventil- und Durchgangskanäle eingegangen, da dies auf dem vorliegenden Gebiet üblich und dem Fachmann an sich geläufig ist. Es sei lediglich angemerkt, dass die Saugluflöffnungen in den Mantelflächen der einzelnen Walzenkörper bei der Rotation derselben selektiv mit Vakuum beaufschlagt werden können.
Als weitere Anwendungen sind Linearvorrichtungen denkbar.

### c) Ausführungsbeispiel

Nachfolgend wird eine Ausführungsform der vorliegenden Erfindung beispielhaft anhand der Zeichnungen beschrieben. Es zeigen:
- Fig. 1: Seitenansicht der erfindungsgemäßen Vorrichtung
- Fig. 2: Steuerventil
- Fig. 3: Gestaltungsbeispiel für die Dichtfläche

Die im Folgenden dargestellte Ausführungsform der erfindungsgemäßen Vorrichtung zum Erzeugen einer sich selbst einstellenden Spaltdichtung kann beispielsweise für die Vakuumversorgung (6) von Saugwalzen(1) zum Transport eines Zuschnittes wie sie bei der Herstellung von Briefhüllen verwendet werden.

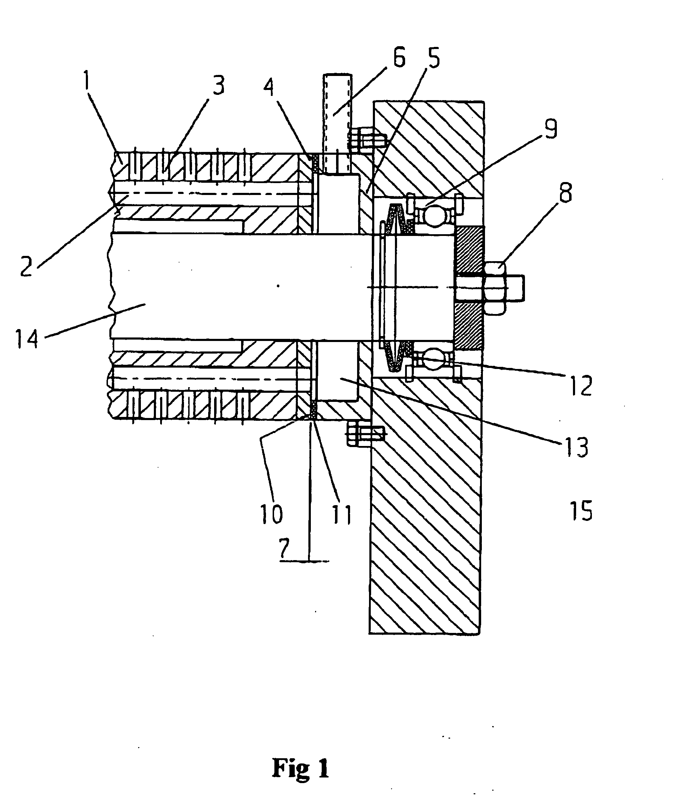

In Fig. 1 ist die erfindungsgemäße Vorrichtung in der Seitenansicht gezeigt. Bei dieser Ausführungsform ist an der Saugwalze (1) die Steuerscheibe (4) befestigt, die eine harte, raue Dichtfläche (10) besitzt, die ein leicht verschleißendes Material wie zum Beispiel Grafit bearbeiten kann. Die Steuerscheibe (4) hat ein auf die gewünschte Anwendung abgestimmtes Bohrbild, so das immer nur der gewünschte Teil Saugbohrungen(3) über die Querbohrungen (2) in der Saugwalze (1) mit dem Vakuum (6) verbunden wird. Die Saugwalze (1) mit der daran befestigten Steuerscheibe (4) ist im Maschinengestell drehbar und axial verschiebbar gelagert.
Das Steuerventil (5) ist fest mit dem Maschinengestell verbunden. Die Dichtfläche des Steuerventil (5) besteht aus einem leicht verschleißenden Material wie z.B. Grafit .
Mit der Verstelleinrichtung, die aus der Einstellmutter (8) auf der Achse (14) und dem Federpaket (12) besteht, wird die harte, raue Dichtfläche (10) der Steuerscheibe (4) mit der Dichtfläche (11) des Steuerventils (5) in Kontakt gebracht. Dies geschieht vor der Inbetriebnahme der Saugwalze (1), wobei der Anpressdruck entsprechend der gewünschten Abnutzung gewählt wird.
Wird die Saugwalze (1) mit der daran befestigten Steuerscheibe (4) in Bewegung gesetzt schleift die Dichtfläche (10) der Steuerscheibe (4) die Dichtfläche (11) des Steuerventils (5) so weit ab, bis kein Kontakt mehr zwischen den Dichtflächen (10, 11) besteht und somit das kleinst mögliche Spaltmaß (7) entstanden ist. Die dabei entstehenden Späne werden von dem Vakuum (6) abgesaugt.

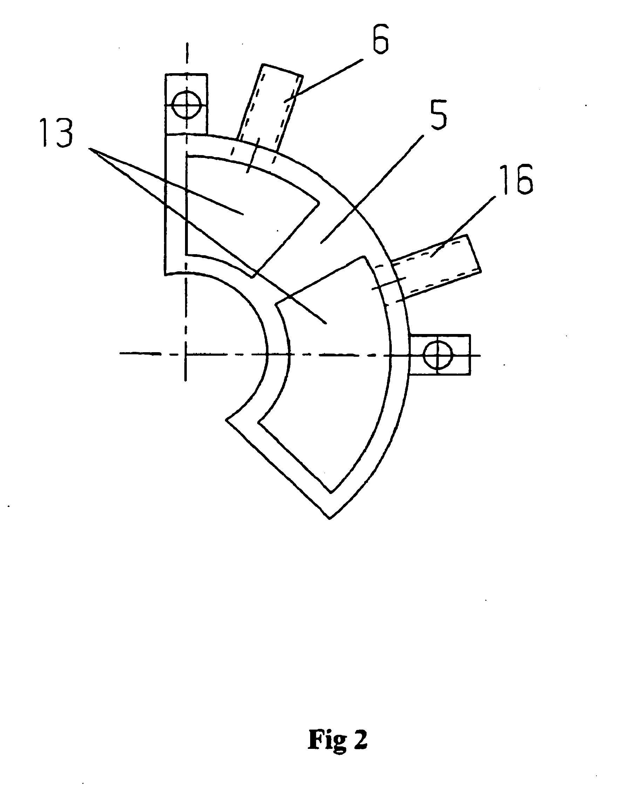

In Fig. 2 ist ein Steuerventil (5) in einer beispielhaften Ausführungsform dargestellt.
Das Steuerventil (5) weist zwei Segmentabschnitte auf, die unabhängig voneinander mit Vakuum (6) oder Druckluft versorgt werden können.

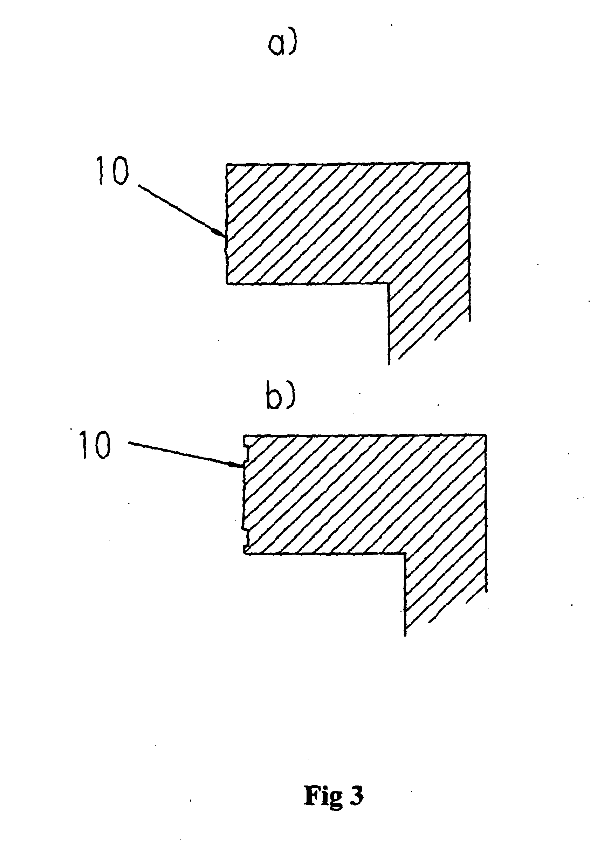

In Fig. 3 sind beispielhaft mögliche Ausführungsformen der bearbeitenden Dichtfläche zu sehen.
a) Sandgestrahlte ebene Dichtfläche
b) Dichtfläche mit Beschichtung (13) und Kontur zur erzeugen einer
Labyrinthdichtung

### BEZUGSZEICHENLISTE

- 1: Saugwalze
- 2: Querbohrungen
- 3: Saugbohrungen
- 4: Steuerscheibe
- 5: Steuerventil
- 6: Vakuum
- 7: Spaltmaß
- 8: Einstellmutter
- 9: Lagerung
- 10: harte Dichtfläche
- 11: weiche Dichtfläche
- 12: Federpaket
- 13: Saug/ Druckkammer
- 14: Achse
- 15: Gestell

## Patentansprüche

1. Vorrichtung zum selbsttätigen Erzeugen einer berührungslosen Spaltdichtung zwischen den parallelen Dichtflächen (10,11) eines axial verschiebbar und im Betrieb fixierbaren Bauteils (5/11a) und eines axial fixieren, um eine Achse (14) rotierenden Bauteils (4,1) oder relativ zueinander rotierender und axial fixierbarer Bauteile, zur Übertragung eines Vakuums (6) oder von Druckluft (16), wobei die Dichtfläche (10,11) in axialer Richtung aufeinander folgen
**dadurch gekennzeichnet, dass**
eine der Dichtflächen (10,11) eines der beiden Bauteile (1 bzw 4, 5 bzw. 11a) eine verschleißfeste, labyrinthartige Oberfläche aufweist und die Gegenfläche eine Oberfläche aufweist, die von der verschleißfesten Oberfläche leicht bearbeitet werden kann, so dass nach Beginn der Rotation zwischen den Dichtflächen (10/11) eine, sich über die gesamte Dichtfläche erstreckende, labyrinthartige Struktur hergestellt wird.

2. Vorrichtung nach Anspruch 1,
**dadurch gekennzeichnet, dass**
die Vorrichtung aus mindestens einem Steuerventil (5) und einer Verstellvorrichtung besteht.

3. Vorrichtung nach Anspruch 1 und 2,
**dadurch gekennzeichnet, dass**
das die Außenkontur der Dichtfläche (11) des Steuerventils(5) ein Ringsegment bildet.

4. Vorrichtung nach Anspruch 1,
**dadurch gekennzeichnet, dass**
das Steuerventil (5) mindestens eine Saug- und /oder Druckkammer (13) aufweist.

5. Vorrichtung nach Anspruch 1,
**dadurch gekennzeichnet, dass**
die Dichtflächen (10,11), durch das axiale Verschieben der im Maschinengestell drehbar gelagerten Achse (14) und der darauf befestigten Saugwalze (I), mit Hilfe einer fixierbaren Einstellmutter (8) gegen ein Federpaket (12), zueinander eingestellt werden.

6. Vorrichtung nach den Ansprüchen 2 und 5,
**dadurch gekennzeichnet, dass**
die Saugwalze (1) in ihrer Lage fixiert ist und das Steuerventil (5) bewegbar über z.B. Zug/Druckschrauben gegenüber dem Gestell (15)einstellbar und fixierbar ist.

7. Vorrichtung nach Anspruch 1,
**dadurch gekennzeichnet, dass**
mindestens eine der Dichtflächen (10,11) als Labyrinth ausgebildet ist.

8. Verfahren zum selbsttätigen erzeugen einer berührungslosen Spaltdichtung, zwischen den parallelen Dichtflächen (10,11) eines axial verschiebbar und im Betrieb ruhenden Bauteils und eines sich um eine Achse rotierenden Bauteils oder relativ zueinander rotierender und axial fixierbarer Bauteile, zur Übertragung eines Vakuums oder von Druckluft, wobei die Dichtflächen (10/11) in axialer Richtung aufeinander folgen
**dadurch gekennzeichnet, dass**
die Dichtflächen (10,11) zur Herstellung des Dichtspaltes (7) durch axiales verschieben in Kontakt gebracht und zueinander axial fixiert werden und der erforderliche Dichtspalt (7) durch eine Relativbewegung zwischen den Dichtflächen (10,11) **dadurch** erzielt wird, dass sich eine der beiden Flächen so abnutzt, dass eine sich über die gesamte Dichtfläche erstreckende, labyrinthartige Struktur entsteht.

9. Verfahren nach Anspruch 8
**dadurch gekennzeichnet, dass**
die Dichtflächen (10,11) durch das Verschieben der an der Achse (14) befestigten Dichtfläche aufeinander gebracht werden.

10. Verfahren nach Anspruch 8
**dadurch gekennzeichnet, dass**
die Dichtflächen (10,11) durch das Verschieben der Dichtfläche am Steuerventil (5) aufeinander gebracht werden.

11. Verfahren nach Anspruch 8
**dadurch gekennzeichnet,dass**
der Dichtspalt (7) sich selbsttätig wieder frei schleift, wenn dieser durch eine Ausdehnung in axialer Richtung der Bauteile (1,4,5,11,14) verkleinert wird.

## Claims

1. Device for automatic creation of a non-contact gap seal between the parallel sealing surfaces (10, 11) of an axially shiftable component (5/11a), fixable during operation, and a component (4, 1) fixed in the axial direction and rotating around a shaft (14) or components rotating relative one to the other and fixable along the axial direction, for the transmission of a vacuum (6) or compressed air (16), wherein the sealing surfaces (10, 11) are arranged in sequence along the axial direction,
**characterized by**
one of the sealing surfaces (10, 11) of one of the two components (1 and/or 4, 5 and/or 11a) exhibiting a wear-resistant, labyrinth-like surface and by the mating surface exhibiting a surface that can be abraded slightly by the wear-resistant surface so that a labyrinth-like structure, extending across the entire sealing surface, is created between the sealing surfaces (10/11) after the commencement of the rotation.

2. Device in accordance with Claim 1,
**characterized by**
the device comprising at least one control valve (5) and one adjustment device.

3. Device in accordance with Claims 1 and 2,
**characterized by**
the outside contour of the sealing surface (11) in the control valve (5) representing a segment of a ring.

4. Device in accordance with Claim 1,
**characterized by**
the control valve (5) exhibiting at least one vacuum and/or pressure chamber (13).

5. Device in accordance with Claim 1,
**characterized by**
the sealing surfaces (10, 11) being adjusted one in relationship to the other by axial shifting of the shaft (14) mounted rotatably in the machine frame and of the suction roll (1) attached thereto, this being effected with the help of a fixable adjusting nut (8) exerting pressure upon a stack of springs (12).

6. Device in accordance with Claims 2 and 5,
**characterized by**
the suction roll (1) being fixed in position and the control valve (5) being movable in relationship to the machine frame (15) by way of tension or thrust screws, for instance, with which it can be adjusted and fixed.

7. Device in accordance with Claim 1,
**characterized by**
at least one of the sealing surfaces (10, 11) being constructed in the form of a labyrinth.

8. Process for automatic creation of a non-contact gap seal between parallel sealing surfaces (10, 11) on an axially shiftable component which is at rest during operation and on a component rotating around a shaft or on components rotating relative one to the other and fixable along the axial direction for transmission of a vacuum or compressed air, wherein the sealing surfaces (10/11) are arranged in sequence along the axial direction,
**characterized by**
the sealing surfaces (10, 11) used to create the sealing gap (7) being brought together by way of axial shifting and being fixed in relationship one to the other and the required sealing gap (7) being created by relative motion between the sealing surfaces (10, 11) so that one of the two surfaces is worn away in such a way that a labyrinth-like structure is created, extending across the entire sealing surface.

9. Process in accordance with Claim 8
**characterized by**
the sealing surfaces (10, 11) being brought together by shifting the sealing surface that is fixed to the shaft (14).

10. Process in accordance with Claim 8
**characterized by**
the sealing surfaces (10, 11) being brought together by shifting the sealing surface at the control valve (5).

11. Process in accordance with Claim 8
**characterized by**
the sealing gap (7) automatically being abraded to clear a space when the size of the gap is reduced by expansion of the components (1, 4, 5, 11, 14) along the axial direction.

## Revendications

1. Dispositif conçu pour la génération autonome d'un joint à fente sans contact entre les surfaces étanches parallèles (10,11) d'un composant (5/11a) qui peut être déplacé dans le sens axial et fixé pendant le service, et d'un composant (4,1) qui est fixé dans le sens axial et tourne sur un axe (14), ou de composants qui tournent relativement l'un vers l'autre et peuvent être fixés dans le sens axial, pour la transmission de vide (6) ou d'air comprimé (16), les surfaces étanches (10,11) se suivant dans le sens axial,
**caractérisé par le fait que**
l'une des surfaces étanches (10,11) de l'un des deux composants (1 ou 4, 5 ou 11 a) présente une surface inusable en forme de labyrinthe et que la surface opposée présente une surface qui peut être aisément traitée par la surface inusable, de manière à ce qu'une structure en forme de labyrinthe s'étendant sur toute la surface étanche s'établisse au début de la rotation entre les surfaces étanches (10/11).

2. Dispositif selon la revendication 1,
**caractérisé par le fait que**
le dispositif est constitué au moins d'une soupape de contrôle (5) et d'un dispositif de réglage.

3. Dispositif selon les revendications 1 et 2,
**caractérisé par le fait que**
le contour extérieur de la surface étanche (1) de la soupape de contrôle (5) forme un segment annulaire.

4. Dispositif selon la revendication 1,
**caractérisé par le fait que**
la soupape de contrôle (5) présente au moins une chambre d'aspiration et / ou de pression (13).

5. Dispositif selon la revendication 1,
**caractérisé par le fait que**
les surfaces étanches (10,11) sont ajustées l'une à l'autre à l'aide d'un écrou de réglage (8) fixable contre un bloc ressort (12), par le déplacement axial de l'axe (14) pivotant dans le bâti de la machine et du rouleau d'aspiration (1) qui est fixé sur celui-ci.

6. Dispositif selon les revendications 2 et 5,
**caractérisé par le fait que**
le rouleau d'aspiration (1) est fixé dans sa position et que la soupape de contrôle (5) peut être réglé par rapport au bâti (15) et fixé de façon mobile via par exemple des vis de traction / de pression.

7. Dispositif selon la revendication 1,
**caractérisé par le fait que**
au moins l'une des surfaces étanches (10,11) présente la forme d'un labyrinthe.

8. Procédé conçu pour la génération autonome d'un joint à fente sans contact entre les surfaces étanches parallèles (10,11) d'un composant qui peut être déplacé dans le sens axial et au repos pendant le service, et d'un composant qui tourne sur un axe, ou de composants qui tournent relativement l'un vers l'autre et peuvent être fixés dans le sens axial, pour la transmission de vide ou d'air comprimé, les surfaces étanches (10,11) se suivant dans le sens axial,
**caractérisé par le fait que**
les surfaces étanches (10,11), pour l'établissement de la fente étanche (7), sont amenées en contact par un déplacement axial et fixées l'une à l'autre et que la fente étanche requise (7) est obtenue par un mouvement relatif entre les surfaces étanches (10,11), de manière à ce que l'une des deux surfaces s'use de sorte qu'une structure en forme de labyrinthe s'étende sur toute la surface étanche.

9. Dispositif selon la revendication 8,
**caractérisé par le fait que**
les surfaces étanches (10,11) sont amenées l'une sur l'autre par le déplacement de la surface étanche fixée à l'axe (14).

10. Dispositif selon la revendication 8,
**caractérisé par le fait que**
les surfaces étanches (10,11) sont amenées l'une sur l'autre par le déplacement de la surface étanche de la soupape de contrôle (5).

11. Dispositif selon la revendication 8,
**caractérisé par le fait que**
la fente étanche (7), lorsqu'elle est réduite par une dilatation des composants (1,4,5,11,14) dans le sens axial, reprend d'elle-même son espacement initial.
